Europäisches Patentamt

European Patent Office

Office européen des brevets

(19)

(11) Numéro de publication : **0 454 515 A1**

(12) # DEMANDE DE BREVET EUROPEEN

(21) Numéro de dépôt : **91400847.9**

(22) Date de dépôt : **28.03.91**

(51) Int. Cl.⁵ : **H02B 1/40**

(30) Priorité : **24.04.90 FR 9005229**

(43) Date de publication de la demande :
**30.10.91 Bulletin 91/44**

(84) Etats contractants désignés :
**AT DE GB SE**

(71) Demandeur : **ROGER ELEKTRONIKBAUTEILE GmbH**
**Zum Gerlen**
**W-6601 Saarbrücken-Ensheim (DE)**

(72) Inventeur : **Stolz, Franz**
**Prélat-Eckhard Strasse 48**
**W-6670 St-Ingbert (DE)**
Inventeur : **Bretnacher, Emile**
**12, rue de la Gare**
**F-67260 Keskastel (DE)**

(74) Mandataire : **Lerner, François et al**
**5, rue Jules Lefèbvre**
**F-75009 Paris (FR)**

(54) **Boîtier à compartiments multiples pour le logement de composants électriques ou électroniques.**

(57)    Boîtier comprenant une boîte formant compartiment de base (3) ouvert sur l'une au moins de ses faces frontales (5, 7), un panneau de fermeture (15),des moyens amovibles (13, 61) de maintien du panneau (15) face à l'ouverture de cette boîte (3), une plaque de fond (19) liée à ladite boîte du côté opposé au panneau (15), et des moyens (21, 22) de fixation de ladite plaque contre un support.

Selon l'invention, le boîtier comprend en outre une autre boîte formant compartiment complémentaire (9) ouvert sur ses deux faces frontales opposées, cette dite autre boîte étant interposée entre la boîte formant compartiment de base (3) et le panneau de fermeture (15) et des moyens de liaison entre les boîtes formant compartiment de base (3) et complémentaire (9).

L'invention s'applique en particulier à la réalisation de boîtiers pour composants électriques ou électroniques.

EP 0 454 515 A1

FIG_1

L'invention concerne un boîtier destiné à recevoir en particulier des composants électriques ou électroniques.

Un certain nombre de boîtiers susceptibles d'être utilisés notamment dans l'application envisagée ci-dessus, comprennent aujourd'hui :

- une boîte formant premier compartiment ouvert au moins sur sa face frontale(avant),
- un panneau de fermeture propre à fermer au moins partiellement ladite ouverture frontale du premier compartiment,
- des moyens amovibles de maintien du panneau en regard de l'ouverture frontale de ce même premier compartiment,
- et des moyens de fixation dudit premier compartiment contre un support.

Toutefois, ces boîtiers existants présentent pour certaines applications différents inconvénients liés à leur manque de modularité, les clients cherchant en effet aujourd'hui de plus en plus à acquérir des systèmes modulaires aisément adaptables à leurs besoins.

On notera en particulier que les boîtiers pour équipements électriques ou électroniques actuellement proposés ne sont habituellement pas réalisés de façon modulaire pour permettre notamment d'adapter leur profondeur en fonction des exigences du client. Leur conception ne permet pas en outre l'interchangeabilité des principaux éléments qui composent tel ou tel boîtier de volumes différents.

On notera dès à présent que la conception de boîtiers modulaires pose un certain nombre de problèmes liés à la nécessaire complémentarité des élément principaux du boîtier devant assurer l'évolution de ce dernier et sa possible adaptation en fonction des exigences de la clientèle, ceci avec bien entendu un coût de revient réduit.

L'invention a pour but de résoudre ces différents problèmes et propose à cet effet un boîtier du type susmentionné qui se caractérise en ce qu'il comprend en outre :

- une autre boîte formant second compartiment amovible pour adapter de façon modulaire la profondeur du boîtier, ce second compartiment qui est ouvert sur ses deux faces, frontale et dorsale, opposées étant interposé entre le premier compartiment et le panneau de fermeture, lequel est susceptible de fermer au moins partiellement ladite ouverture frontale de ce premier compartiment, les moyens amovibles de maintien du panneau étant adaptés pour maintenir ce panneau en regard de l'ouverture frontale correspondante de ce second compartiment,
- et des moyens de liaison entre les boîtes formant les deux compartiments.

Selon une autre caractéristique de l'invention, pour favoriser le montage et le démontage du panneau de fermeture en regard de l'ouverture frontale du second compartiment, les moyens amovibles de maintien de ce panneau (lequel pourra par exemple consister en une porte) comprendront de préférence :

- un cadre-support avec une aile périphérique venant s'engager à travers ladite ouverture frontale de ce second compartiment,
- des moyens de fixation dudit cadre-support à ce compartiment,
- et des moyens de liaison entre le panneau et le cadre-support.

Compte-tenu des normes imposées aux boîtiers et autres armoires prévues pour renfermer des composants électriques ou électroniques, il est prévu, conformément à une autre caractéristique de l'invention, que les compartiments soient de préférence tous deux ouvertes sur leurs deux faces opposées et présentent chacun périphériquement un pan de cadre s'étendant sensiblement dans le plan de la face considérée des compartiments et vers la partie centrale de cette face, chacun de ces pans se prolongeant par un rebord dirigé sensiblement perpendiculairement au pan correspondant, les rebords d'un même compartiment étant dirigés dans le même sens, de telle sorte qu'il y ait un possible emboîtement partiel de ces mêmes compartiments.

On va maintenant décrire de façon plus détaillée les caractéristiques du boîtier de l'invention, ceci en relation avec les dessins d'accompagnement données uniquement à titre d'exemples non limitatifs et dans lesquels :

la figure 1 est une une d'ensemble en perspective et en éclatée d'un boîtier conforme à l'invention,

la figure 2 est une une partielle le long de la ligne de coupe II-II de la figure 1, le boîtier étant alors dans son état assemblé,

et la figure 3 est une autre vue locale plus détaillée selon la même ligne de coupe du boîtier de la figure 1 dont le second compartiment est alors en position ouverte, ayant pivoté autour de son axe de charnière.

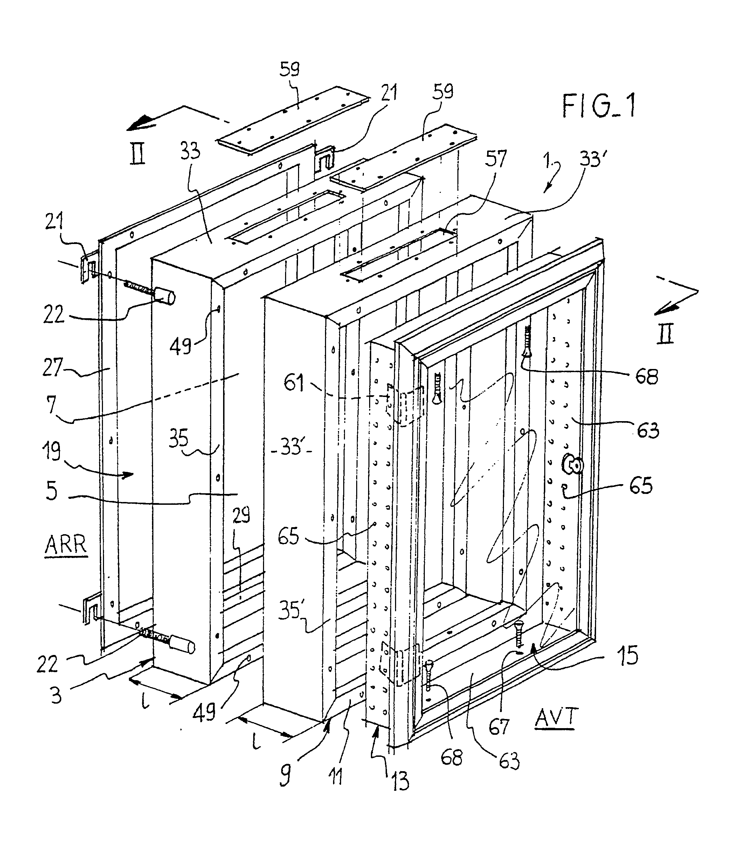

Si l'on se reporte tout d'abord à la figure 1, on voit donc illustré un boîtier métallique pour équipements électriques ou électroniques, repéré dans son ensemble 1.

Ce boîtier comprend une boîte rectangulaire formant compartiment premier, ou de base, 3, en l'espèce en forme de cadre ouvert sur ses deux faces opposées 5, 7, ainsi qu'une boîte formant compartiment second, ou complémentaire, 9 qui est ici réalisé de façon identique au compartiment 3, avec notamment la même profondeur l.

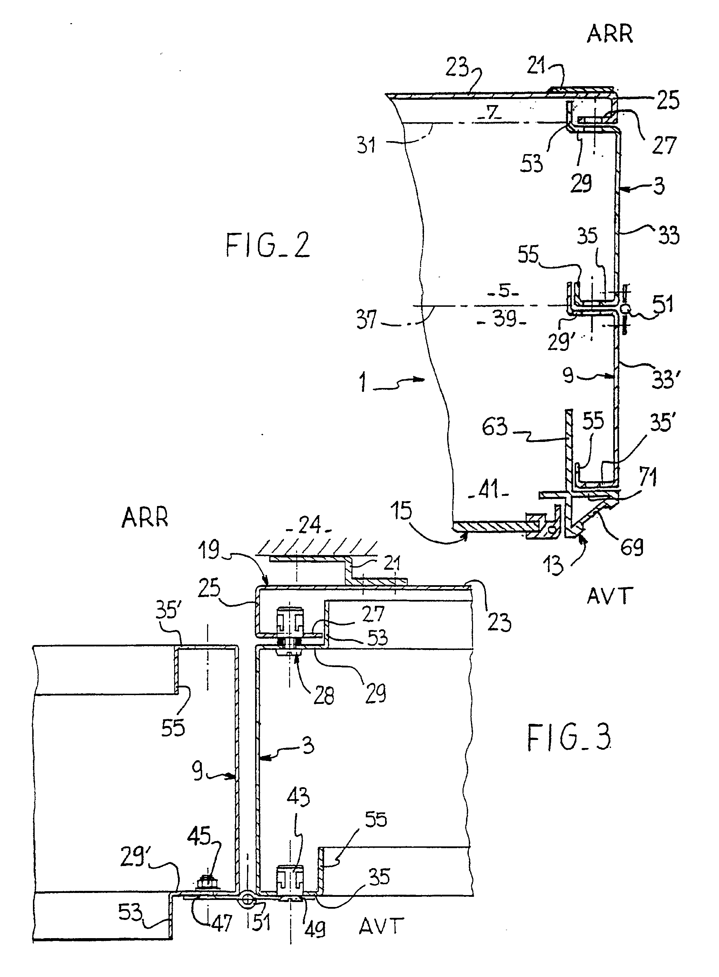

Dans l'état assemblé du boîtier 1, les deux compartiments 3 et 9 sont accolés de façon à constituer un compartiment "continu" de largeur 2l, le cadre 9 recevant ici, au niveau d'un pan périphérique avant 11, un cadre-support 13 équipé d'un panneau de fermeture 15, en l'espèce une porte vitrée, tandis que le premier compartiment 3 reçoit, au niveau d'un pan périphérique arrière 29, une plaque métallique ou caisse de fond 19 venant fermer l'arrière du boîtier et comprenant des pattes de fixation, telles que 21, destinées notamment à permettre une fixation du boîtier sur un support, tel qu'un mur figuré en 24 sur la figure 3, via par exemple des vis 22.

Par souci de clarté on a repéré sur les figures par AVT et ARR les côtés respectivement avant et arrière du boîtier.

On va maintenant décrire de façon plus détaillée la constitution des différents éléments sus-mentionnés du boîtier.

Comme on le voit clairement sur les figures, la caisse de fond 19 du boîtier peut tout d'abord se présenter sous la forme d'une cuvette avec un fond plein 23 et des parois latérales périphériques 25 s'étendant du fond 23 vers le compartiment 3 en se prolongeant par un rebord périphérique 27 tourné vers l'intérieur et venant s'appliquer contre le pan périphérique coopérant 29 s'étendant sensiblement dans le plan 31 de la face dorsale ouverte du premier compartiment, vers la partie centrale de cette face.

Sur les figures 2 et 3, on remarquera qu'en 21 a à nouveau été représentée l'une des pattes de fixation du boîtier, ladite patte étant en l'espèce (comme les autres non représentées) fixée rigidement au fond 23 de la plaque 19.

Bien entendu, des moyens de fixation seront prévus pour assurer d'une part la fixation du boîtier sur son support de réception 24, via les pattes 21, et d'autre part pour assurer la liaison entre-elles de la pièce 21 et du compartiment 3, via leurs rebords périphériques coopérants 27, 29 (système vis-écrou avec entretoise, repéré 28 sur la figure 3).

A l'opposé de la caisse de fond 19, les parois latérales 33 de la boîte 3 présentent un autre pan 35 encadrant l'ouverture frontale avant 5 de cette boîte et s'étendant sensiblement dans le plan 37 de l'ouverture, vers la partie centrale de cette dernière, de la même manière que pour le pan 29.

Compte-tenu de la réalisation structurellement identique dans son principe des compartiments 3 et 9, le pan périphérique 35 de la boîte 3 est destiné à venir coopérer avec un pan ou bord complémentaire associé 29' de la boîte 9, ce pan 29' étant identique au pan 29.

De la même manière, les parois latérales 33' de la boîte 9 présentent à leur extrémité avant un bord ou pan de cadre perpendiculaire 35' identique au pan 35 de la boîte de base 3 et venant encadrer l'ouverture frontale 41 de ladite boîte complémentaire 9.

Pour leur liaison entre-elles, les boîtes 3 et 9 pourront être liées au niveau de leurs rebords en regard 29', 35, via par exemple des vis d'assemblage telles que figurées en 43 et 45 sur la figure 3. En l'espèce, ces vis permettent la liaison desdites boîtes au niveau d'ailes de charnière 51 disposées sur l'un des côtés de ces boîtes pour autoriser leur articulation relative en rotation (voir notamment figure 3).

Bien entendu, pour leur assemblage, les pans correspondants des boîtes et les ailes des charnières seront percés d'orifices coopérants, tels que figurés en 47 et 49 sur la figure 3, et l'on comprendra que d'autres types d'assemblage, par exemple fixes, pourraient-être prévus pour lier ensemble les deux boîtes 3, 9.

Pour répondre aux exigences de la clientèle et satisfaire aux applications envisagées, on notera encore que les différents pans 29, 35, 29', 35' desdites boîtes se termineront de préférence par un rebord, repéré 53 ou 55 et dirigé sensiblement perpendiculairement au pan correspondant, les rebords d'une même boîte étant orientés dans le même sens de telle sorte qu'il y ait possibilité d'un emboîtement partiel du second bâti 9 dans la boîte de base 3, tel que cela est clairement illustré sur la figure 2. L'ouverture arrière 39 de la boîte 9 sera donc, dans ces conditions, de dimensions légèrement inférieures à celles de l'ouverture 5 en regard de la boîte de base 3.

Compte-tenu de la description qui vient d'être faite du boîtier de l'invention, on aura compris qu'en pratique les compartiments de base et complémentaire seront avantageusement structurellement identiques et de même dimension, ou de profondeurs différentes, de façon à réduire le nombre de pièces nécessaires à la réalisation du boîtier et à obtenir une interchangeabilité entre les pièces de deux boîtiers.

C'est d'ailleurs dans cet esprit que, comme on peut le voir clairement sur la figure 1, les deux boîtes 3, 9 présentent sur l'une de leurs faces latérales 33, 33' une large ouverture 57 pouvant être obturée par une plaque 59. Les ouvertures 57 seront en particulier destinées à permettre le passage, à travers des perçages effectués dans les plaques 59, de câbles électriques de liaison associés à des composants notamment électriques ou électroniques (non représentés) disposés à l'intérieur de l'une et/ou l'autre des boîtes 3, 9. Les ouvertures 57 des boîtes pourront être à volonté orientées dans le même sens (figure 1) ou en sens inverses (non représenté).

Afin d'assurer le maintien et la fixation à l'intérieur du boîtier de certains au moins de ces composants, le cadre-support 13 sur lequel peut venir s'articuler (à l'avant du boîtier et autour de charnières 61) la porte 15, sera avantageusement pourvu d'une aile périphérique d'encadrement 63 en retrait venant s'engager à travers l'ouverture frontale 41 de la boîte 9 (voir figure 2). Et pour assurer sa fonction, cette aile d'encadrement 63 présentera de préférence, dans ses deux parois latérales opposées, plusieurs séries d'orifices tels que figurés en 65 sur la figure 1, destinés à recevoir à travers eux des moyens de fixation des composants électroniques à loger dans le boîtier.

Par ailleurs, des orifices complémentaires, tels que 67, pourrons être également ménagés dans les autres faces du cadre 63 afin d'assurer la fixation du cadre 13 à la boîte complémentaire 9 (figure 1), via par exemple des vis 68.

Comme on le voit sur la figure 1 et plus clairement sur la figure 2, ce cadre 13 qui comprendra de préférence une partie principale 59 ayant en section (dans le plan II-II) la forme d'un triangle viendra s'appliquer par l'une de ces faces 71 contre la face extérieure du pan 35 de la boîte 9. Ainsi, le panneau de fermeture avant 15 du boîtier sera encadré par une bordure périphérique en biais, améliorant l'esthétique du boîtier et évitant les angles aigus toujours dangereux.

Il doit être clair que d'autres variantes de réalisation du boîtier de l'invention pourraient être envisagées. En particulier, on pourrait imaginer d'utiliser une boîte de base 3 ouverte uniquement sur sa face avant 5 et comprenant un fond intégré sur sa face dorsale opposée 7. Pour la fixation du boîtier, des pattes, telles que 21, pourraient alors être soudées directement sur le fond en question.

Egalement, plus de deux boîtes (de même profondeur ou de profondeurs différentes) pourraient être associées deux à deux en accolement pour fermer un boîtier modulaire satisfaisant la demande d'un client.

On notera encore que les charnières 51 (compartiment de base/compartiment complémentaire ) et/ou 61 (compartiment complémentaire/panneau de fermeture) peuvent-être, conformément à l'invention, montées indifféremment le long de l'un quelconque des côtés du boîtier, en fonction des exigences du client.

**Revendications**

1. Boîtier comprenant :
   – une boîte formant premier compartiment (3) ouvert au moins sur sa face frontale avant (5),
   – un panneau de fermeture (15) propre à fermer, au moins partiellement, ladite ouverture frontale du premier compartiment (3),
   – des moyens amovibles (13, 61, 67, 68) de maintien du panneau (15) en regard de l'ouverture frontale de ce même premier compartiment (3),
   – et des moyens (21, 22) de fixation dudit premier compartiment contre un support (24),
   caractérisé en ce qu'il comprend en outre :
   – une autre boîte formant second compartiment (9) amovible pour adapter de façon modulaire la profondeur du boîtier, ce second compartiment qui est ouvert sur ces deux faces frontale et dorsale opposées (39, 41) étant interposé entre ledit premier compartiment (3) et le panneau de fermeture (15) lequel est susceptible de fermer au moins partiellement l'ouverture frontale dudit second compartiment, les moyens amovibles de maintien du panneau (15) étant adaptés pour maintenir alors ce panneau en regard de l'ouverture frontale (41) de ce second compartiment,
   – et des moyens (43, 45, 51) de liaison entre les premier et second compartiments (3,9).

2. Boîtier selon la revendication 1 caractérisé en ce qu'une ouverture (57) équipée d'une plaque de recouvrement (59) est ménagée à travers une paroi latérale (33, 33') du premier et/ou du second compartiment(s) (3,9) pour le passage de câbles électriques associés à des équipements disposés à l'intérieur dudit boîtier.

3. Boîtier selon la revendication 1 ou la revendication 2 caractérisé en ce que les moyens de liaison (43, 45, 51) entre lesdits premier et second compartiments (3,9) comprennent au moins une charnière (51) fixée le long de deux parties adjacentes (29', 35) de ces compartiments pour autoriser leur articulation relative en rotation.

4. Boîtier selon l'une quelconque des revendications précédentes caractérisé en ce que les moyens amovibles (13, 61, 67, 68) de maintien du panneau (15) en regard de l'ouverture frontale (41) du second compartiment (9) comprennent :
   – un cadre-support (13) avec une aile périphérique (63) venant s'engager à travers l'ouverture frontale (41) de ce second compartiment,
   – des moyens (68) de fixation dudit cadre-support (13) à ce même second compartiment,
   – et des moyens (61) de liaison entre ledit panneau (15) et le cadre-support.

5. Boîtier selon la revendication 4 caractérisé en ce que les moyens de liaison entre le panneau de fermeture (15), lequel consiste en une porte, et le cadre support (13) comprennent au moins une charnière (61) d'articulation du panneau par rapport au cadre, cette charnière étant fixée d'un côté sur ledit panneau et, d'un autre côté, sur ledit cadre-support.

6. Boîtier selon la revendication 4 ou la revendication 5 caractérisé en ce que ladite aile périphérique (63) du cadre-support (13) qui s'étend vers l'espace intérieur du second compartiment (9) est percée d'orifices (65) recevant des moyens de fixation pour des équipements électriques ou électroniques devant être logés à l'intérieur dudit boîtier.

7. Boîtier selon l'une quelconque des revendications précédentes caractérisé en ce que le premier et le second compartiments (3, 9) présentent périphériquement sur leur face frontale et/ou dorsale ouverte (5, 7 ; 39, 41), un pan de cadre (29, 35, 29′, 35′) s'étendant sensiblement dans le plan de la face du compartiment considéré et vers la partie centrale de cette face, des orifices (47, 49) étant ménagés dans ledit pan pour recevoir à travers eux des moyens de fixation (28, 43, 45) associés auxdits moyens de liaison entre les premier et second compartiments (3, 9) et/ou entre le premier compartiment et une plaque de fond (19) fermant ce compartiment de son côté dorsal opposé au second compartiment.

8. Boîter selon la revendication 7 caractérisé en ce que les premier et second compartiments (3, 9) sont ouverts sur leurs deux faces frontale et dorsale opposées et présentent périphériquement, autour de leurs dites faces ouvertes, un dit pan (29, 35 ; 29′, 35′), chacun de ces pans se prolongeant par un rebord (53, 55) dirigé sensiblement perpendiculairement au pan correspondant, les rebors d'un même compartiment (3, 9) étant dirigés dans le même sens, de telle sorte qu'il y ait emboîtement partiel des compartiments.

9. Boîtier selon la revendication 4 et la revendication 7 caractérisé en ce que le cadre-support (13) comprend une partie principale (69) ayant en section la forme d'un triangle dont l'une des faces (71) vient s'appliquer contre la face extérieure du pan correspondant (35′) du second compartiment (9).

10. Boîtier selon l'une quelconque des revendications précédentes caractérisé en ce que les premier et second compartiments (3, 9) sont structurellement identiques et de mêmes dimensions.

FIG_1

ARR

23  21

25

7

31  53  27

29  3

FIG_2  35  33

55

-5-

37  -39-  51

29'

1  9  33'

63  55  35'

71

-41-

15  69

13

AVT

ARR  -24-

19  21

25  27  23

35'  53

55  29

28  3

FIG_3

9

43

45  55

29'  35

53  47  51  49  AVT

Office européen
des brevets

**RAPPORT DE RECHERCHE EUROPEENNE**

Numero de la demande

EP    91 40 0847

| DOCUMENTS CONSIDERES COMME PERTINENTS | | | |
|---|---|---|---|
| Catégorie | Citation du document avec indication, en cas de besoin, des parties pertinentes | Revendication concernée, | CLASSEMENT DE LA DEMANDE (Int. Cl.5 ) |
| A | CH-A-417727 (LUTHI)<br>* le document en entier *<br>--- | 1, 3 | H02B1/40 |
| A | DE-U-7425584 (SIEMENS AG)<br>* page 3; figure 1 *<br>----- | 1, 3 | |
| | | | DOMAINES TECHNIQUES RECHERCHES (Int. Cl.5 )<br><br>H02B<br>A47B |

Le présent rapport a été établi pour toutes les revendications

| Lieu de la recherche | Date d'achèvement de la recherche | Examinateur |
|---|---|---|
| LA HAYE | 05 JUILLET 1991 | WOODALL C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)